(19) Europäisches Patentamt
European Patent Office
Office européen des brevets

(11) EP 4 632 340 A1

(12) EUROPEAN PATENT APPLICATION
published in accordance with Art. 153(4) EPC

(43) Date of publication:
15.10.2025 Bulletin 2025/42

(51) International Patent Classification (IPC):
$G01J\ 1/44^{(2006.01)}$

(21) Application number: 23899304.2

(52) Cooperative Patent Classification (CPC):
G01J 1/44

(22) Date of filing: 08.05.2023

(86) International application number:
PCT/CN2023/092685

(87) International publication number:
WO 2024/119710 (13.06.2024 Gazette 2024/24)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 05.12.2022 CN 202211551429

(71) Applicant: WUHAN JUXIN MICRO-ELECTRONICS
CO., LTD.
Wuhan, Hubei 430270 (CN)

(72) Inventors:
• JIANG, Hui
Wuhan, Hubei 430270 (CN)
• WANG, Huan
Wuhan, Hubei 430270 (CN)
• QUAN, Rui
Wuhan, Hubei 430270 (CN)

(74) Representative: Patentgruppen A/S
Aaboulevarden 31, 4th Floor
8000 Aarhus C (DK)

(54) **LIGHT SENSOR READOUT CIRCUIT AND CHIP**

(57) The present disclosure provides a light sensor readout circuit and a chip for reading the current of a light sensing module, wherein the light sensor readout circuit comprises an oscillation module, a comparison module, a charge output module and an integral module, wherein the oscillation module is used for outputting an oscillation signal, the comparison module is used for comparing a reference signal and the oscillation signal and outputting a comparison signal, the charge output module is used for outputting charge according to the comparison signal, and the integral module is used for changing the oscillation frequency of the oscillation module according to the charge output by the charge output module. The present disclosure can accurately measure the current of the light sensing module, and overcomes the problem that the photogenerated current of the light sensing module is small and it is difficult to detect by the conventional current detection method.

Fig. 1

EP 4 632 340 A1

# Description

## TECHNICAL FIELD OF THE DISCLOSURE

The present disclosure relates to the technical field of integrated circuits, in particular to a light sensor readout circuit and a chip including the light sensor readout circuit.

## BACKGROUND

A light sensor can sense intensity of ambient light, which may be indicated to a processing chip in order to automatically adjust brightness of a display backlight, thereby reducing power consumption of a product. For example, in mobile applications such as mobile phones, notebooks, tablets, and the like, power consumed by the screen is up to 30% of the total battery power. Using a light sensor to sample the ambient light intensity and adjust brightness of the screen can not only maximize operation time of the battery, but also make the brightness of the screen change with the ambient brightness, which facilitates the screen to provide soft images. However, a photovoltaic current of the light sensor is small, which is difficult to be detected by conventional current detection methodologies.

## SUMMARY

The present disclosure provides a light sensor readout circuit and a chip, aiming to solve the technical problem that a light sensor has a small current which is difficult to be detected.

According to a first aspect, the present disclosure provides a light sensor readout circuit for reading a current of a light sensing module, the light sensor readout circuit comprising: an oscillation module configured to output an oscillation signal; a comparison module configured to compare a reference signal with the oscillation signal and output a comparison signal; a charge output module configured to output charges according to the comparison signal; an integral module configured to change an oscillation frequency of the oscillation module according to the charges output by the charge output module; wherein a quantity of the charges output by the charge output module is equal to a quantity of charges passing through the light sensing module.

In some embodiments, a control end of the charge output module is connected to an output end of the comparison module, and the charge output module is configured to alternately output the charges according to the comparison signal; an input end of the integral module is connected with an output end of the charge output module, an output end of the integral module is connected with a control end of the oscillation module, and the integral module is configured to change the oscillation frequency of the oscillation module according to the charges output by the charge output module; the light sensing module is connected with the integral module, wherein after receiving the charges output by the charge output module, the integral module outputs charges to the light sensing module, and the quantity of the charges output by the charge output module is equal to the quantity of the charges passing through the light sensing module.

In some embodiments, the charge output module alternately outputs charges according to the comparison signal; the integral module alternately controls the oscillation frequency of the oscillation module to increase or decrease according to the charges alternately output by the charge output module; wherein after receiving the charges output by the charge output module, the integral module outputs charges to the light sensing module.

In some embodiments, the charge output module has a first operating state and a second operating state, and it switches between the first operating state and the second operating state based on the comparison signal; when the charge output module is in the first operating state, the charge output module supplies charges to the integral module, and the integral module controls the oscillation module to increase the oscillation frequency based on accumulated charges; when the charge output module is in the second operating state, the charge output module stops supplying charges to the integral module, and the integral module discharges charges to the light sensing module.

In some embodiments, the light sensing module is connected to the charge output module, and when the charge output module is in the first operating state, the charge output module simultaneously supplies charges to the integral module and the light sensing module; when the charge output module is in the second operating state, the charge output module stops supplying charges to the integral module and the light sensing module.

In some embodiments, the integral module comprises an integrator, and the light sensing module comprises a photodiode; an inverting input end of the integrator is connected with a negative pole of the photodiode, a non-inverting input end of the integrator is configured to receive a first preset voltage, an output end of the integrator is connected with the oscillation module, and a positive pole of the photodiode is grounded.

In some embodiments, the charge output module comprises a control switch; one end of the control switch is connected with the inverting input end of the integrator, the other end of the control switch is configured to receive a fixed current source, and a control end of the control switch is configured to receive the comparison signal and change a switch state of the control switch based on the comparison signal, such that the charge output module switches between the first operating state and the second operating state.

In some embodiments, the current of the light sensing module satisfies a following relationship:

$$I1 = I2 * T1/(T1+T2)$$

where I1 is the current of the light sensing module, I2 is a current of the charge output module, T1 is time during which the control switch is closed, and T2 is time during which the control switch is opened.

In some embodiments, the comparison module includes a phase comparison submodule and a pulse width adjustment submodule; the phase comparison submodule is configured to compare a phase of the reference signal and a phase of the oscillation signal and output a signal to be processed which has a pulse width equal to a phase difference between the oscillation signal and the reference signal; the pulse width adjustment submodule is configured to adjust the pulse width of the signal to be processed so as to generate the comparison signal with a fixed pulse width.

In some embodiments, the current of the light sensing module satisfies a following relationship:

$$I1 = I2 * T * N$$

where I1 is the current of the light sensing module, I2 is a current of the charge output module, T is the fixed pulse width of the comparison signal, and N is a number of times that the control switch is closed per unit time.

In some embodiments, the phase comparison submodule includes a first flip-flop, a second flip-flop, a first AND gate, and a first delayer, and the pulse width adjustment submodule comprises a pulse generator; a control end of the first flip-flop is configured to receive the reference signal, an input end of the first flip-flop is configured to receive an operating voltage, and an output end of the first flip-flop is connected with a first input end of the first AND gate; a control end of the second flip-flop is configured to receive the oscillation signal, an input end of the second flip-flop is configured to receive the operating voltage, and an output end of the second flip-flop is connected with a second input end of the first AND gate; an input end of the first delayer is connected with an output end of the first AND gate, and a reset end of the first flip-flop and a reset end of the second flip-flop are connected with an output end of the first delayer; an input end of the pulse generator is connected with the output end of the first flip-flop or the output end of the second flip-flop, and an output end of the pulse generator is connected with the control end of the control switch.

In some embodiments, the integral module comprises an integrator, and the light sensing module comprises a photodiode; the charge output module includes a first sub-switch and a second sub-switch; a non-inverting input end of the integrator is configured to receive a first preset voltage, and an output end of the integrator is connected with the oscillation module; one end of the second sub-switch is connected with an inverting input end of the integrator, and the other end of the second sub-switch is connected with a negative pole of the photodiode, and a positive pole of the photodiode is grounded; one end of the first sub-switch is configured to receive an operating voltage, and the other end of the first sub-switch is connected to a third node between the second sub-switch and the inverting input end of the integrator; wherein a control end of the first sub-switch is configured to receive the comparison signal and change a switch state of the first sub-switch based on the comparison signal, and the switch state of the first sub-switch is opposite to a switch state of the second sub-switch.

In some embodiments, the current of the light sensing module satisfies a following relationship:

$$I1 = I2 * t01/t02$$

where I1 is the current of the light sensing module, I2 is a current of the charge output module, t01 is time during which the first sub-switch is closed, and t02 is time during which the second sub-switch is opened.

In some embodiments, the comparison module comprises a first flip-flop, a second flip-flop, a first AND gate, and a first delayer; a control end of the first flip-flop is configured to receive the reference signal, an input end of the first flip-flop is configured to receive the operating voltage, and an output end of the first flip-flop is connected with a first input end of the first AND gate; a control end of the second flip-flop is configured to receive the oscillation signal, an input end of the second flip-flop is configured to receive the operating voltage, and an output end of the first flip-flop is connected with a second input end of the first AND gate; an input end of the first delayer is connected to an output end of the first AND gate, and a reset end of the first flip-flop and a reset end of the second flip-flop are connected to an output end of the first delayer; a control end of the first sub-switch is connected with the output end of the first flip-flop.

In some embodiments, it is characterized in that a ratio of the current of the light sensing module to the current of the charge output module ranges from 1: 5000 to 1: 100.

In some embodiments, the charge output module comprises a first switch, a second switch, a third switch, a fourth switch, and a control capacitor; one end of the first switch is connected with a first end of the control capacitor, and the other end of the first switch is configured to receive a second preset voltage; one end of the second switch is connected with a second end of the control capacitor, and the other end of the second switch is connected with the inverting input end of the integrator; one end of the third switch is connected to a first node between the first switch and the control capacitor, and the other end of the third switch is grounded; one end of the fourth switch is connected to a second node between the second switch and the control capacitor, and the other end of the fourth switch is configured to receive the first preset voltage; control ends of the first switch and the second switch are configured to receive the comparison signal and change switch states based on the comparison signal; and control ends of the third switch and the fourth switch are configured to receive a control signal inverted to the comparison signal, and change switch states based on the control signal.

In some embodiments, the current of the light sensing module satisfies a following relationship:

$$I1 = Cc * V2 * N$$

where I1 is the current of the light sensing module, Cc is a capacitance value of the control capacitor, V1 is the first preset voltage, V2 is the second preset voltage, and N is a number of times the second switch is closed per unit time.

In some embodiments, the comparison module comprises a first flip-flop, a second flip-flop, a first AND gate, a first delayer, and a first inverter; a control end of the first flip-flop is configured to receive the reference signal, an input end of the first flip-flop is configured to receive an operating voltage, and an output end of the first flip-flop is connected with a first input end of the first AND gate; a control end of the second flip-flop is configured to receive the oscillation signal, an input end of the second flip-flop is configured to receive the operating voltage, and an output end of the second flip-flop is connected with a second input end of the first AND gate; an input end of the first delayer is connected to an output end of the first AND gate, and a reset end of the first flip-flop and a reset end of the second flip-flop are connected to an output end of the first delayer; an input end of the first inverter is connected to the output end of the first flip-flop; the control ends of the first switch and the second switch are connected to the output end of the first flip-flop, and the control ends of the third switch and the fourth switch are connected to an output end of the first inverter.

In some embodiments, the comparison module comprises a first resistor, a first comparator, an equivalent capacitor, a fifth switch, a sixth switch; wherein the first resistor, the fifth switch and the equivalent capacitor are sequentially connected in series, one end of the first resistor away from the fifth switch is configured to receive an operating voltage, and one end of the equivalent capacitor away from the fifth switch is grounded; one end of the sixth switch is connected to a fourth node between the fifth switch and the equivalent capacitor, and the other end of the sixth switch is grounded; an inverting input end of the first comparator is configured to receive a third preset voltage, a non-inverting input end of the first comparator is connected to a fifth node between the first resistor and the fifth switch, and an output end of the first comparator is configured to output the comparison signal; and a control end of the fifth switch is configured to receive the oscillation signal and change a switch state of the fifth switch based on the oscillation signal, and a switch state of the sixth switch is opposite to the switch state of the fifth switch.

In some embodiments, the oscillation module comprises a ring oscillator and an acceleration switch; wherein the ring oscillator comprises a plurality of inverters series-connected in a ring, and a control end of the acceleration switch is connected with the output end of the integrator; and one end of the acceleration switch is configured to receive an operating voltage, and the other end of the acceleration switch is connected with the power end of the inverter.

In a second aspect, the present disclosure provides a chip comprising the light sensor readout circuit according to the first aspect.

In the present disclosure, the comparison module compares the reference signal with the oscillation signal to generate a comparison signal, based on which the charge output module can alternately output charges, and the integral module can control an oscillation frequency of the oscillation module to alternately increase or decrease according to the changing charge quantity.

Because the reference signal and the oscillation signal are dynamically balanced in the above alternating process, the comparison module can continuously output the comparison signal, and because the integral module has an average inflow charge quantity equal to 0 while it dynamically changes the oscillation frequency of the oscillation module, the charge quantity output by the charge output module is equal to the charge quantity passing through the light sensing module, so that a cumulative measurement of the charge quantity passing through the light sensing module can be achieved based on the comparison signal (for example, a product of the high-level time of the comparison signal and the current of the light sensing module), and the light intensity can be derived from a relationship between the current of the light sensing module and the light intensity.

BRIEF DESCRIPTION OF THE DRAWINGS

In order to more clearly explain the technical solutions in the embodiments of the present disclosure, the accompanying drawings that need to be used in the description of the embodiments will be briefly introduced below, and it is obvious that the accompanying drawings in the following description are only some embodiments of the present invention, and for those skilled in the art, other accompanying drawings can be obtained from these accompanying drawings without making creative labor.

Fig. 1 is a schematic block diagram of a light sensor readout circuit according to an embodiment of the present disclosure;
Fig. 2 is a schematic circuit diagram of a light sensor readout circuit according to an embodiment of the present disclosure;
Fig. 3 is a schematic circuit diagram of a light sensor readout circuit according to another embodiment of the present disclosure;
Fig. 4 is a timing chart illustrating pulse signals of a light sensor readout circuit according to an embodiment of the present disclosure;

Fig. 5 is a timing chart illustrating pulse signals of a light sensor readout circuit according to an embodiment of the present disclosure;

Fig. 6 is a timing chart illustrating pulse signals of a light sensor readout circuit according to an embodiment of the present disclosure;

Fig. 7 is a schematic diagram illustrating high level time measurement of a comparison signal according to an embodiment of the present disclosure;

Fig. 8 is a schematic block diagram of a light sensor readout circuit according to an embodiment of the present disclosure;

Fig. 9 is a schematic circuit diagram of a light sensor readout circuit according to another embodiment of the present disclosure;

Fig. 10 is a timing chart illustrating pulse signals of a light sensor readout circuit according to another embodiment of the present disclosure;

Fig. 11 is a schematic block diagram of a light sensor readout circuit according to an embodiment of the present disclosure;

Fig. 12 is a schematic circuit diagram of a light sensor readout circuit according to another embodiment of the present disclosure;

Fig. 13 is a timing chart illustrating pulse signals of a light sensor readout circuit according to another embodiment of the present disclosure.

Fig. 14 is a schematic circuit diagram of a light sensor readout circuit according to another embodiment of the present disclosure;

Fig. 15 is a timing chart illustrating pulse signals of a light sensor readout circuit according to another embodiment of the present disclosure;

Fig. 16 is a schematic circuit diagram of a light sensor readout circuit according to another embodiment of the present disclosure;

Fig. 17 is a schematic circuit diagram of a light sensor readout circuit according to another embodiment of the present disclosure.

DETAILED DESCRIPTION

Hereinafter, the technical solutions in the embodiments of the present disclosure will be clearly and completely described with reference to the accompanying drawings in the embodiments of the present disclosure, and it is obvious that the described embodiments are only some embodiments of the present invention, but not all embodiments. Based on the embodiments in the present invention, all other embodiments obtained by those skilled in the art without creative work belong to the scope of protection of the present invention.

In the description of the present invention, it should be understood that the orientation or positional relationships indicated by the terms "center", "longitudinal", "transverse", "length", "width", "thickness", "upper", "lower", "front", "back", "left", "right", "vertical", "horizontal", "top", "bottom", "inner", "outer" and the like are based on the orientation or positional relationships shown in the accompanying drawings, and are only for ease of description and simplification of the description of the present invention, without indicating or implying that the referred device or element must be constructed and operated in a particular orientation, whereby these orientation or positional relationships should not be considered to limit the present disclosure. Furthermore, the terms "first" and "second" are for descriptive purposes only, and are not to be understood as explicitly indicating or implicitly indicating relative importance or the number of technical features indicated. Thus, features defined by "first", "second" may explicitly or implicitly include one or more of the features. In the description of the present disclosure, "a plurality of" means two or more unless specifically defined otherwise.

In the present disclosure, the word "exemplary" is used to mean "serving as an example, illustration, or description". Any embodiment described herein as "exemplary" is not necessarily to be construed as being more preferred or superior to other embodiments. In order to enable any person skilled in the art to carry out and use the present invention, the following description is given. In the following description, details are set forth for purposes of explanation. It should be understood that one of ordinary skill in the art will recognize that the present invention can be practiced without using these specific details. In other examples, well-known structures and processes will not be described in detail in order to avoid obscuring the description of the present invention with unnecessary details. Accordingly, the present disclosure is not intended to be limited to the illustrated embodiments, but is intended to be accorded the widest scope consistent with the principles and features disclosed herein.

Embodiments of the present disclosure provide a light sensor readout circuit and a chip, which will be described in detail below.

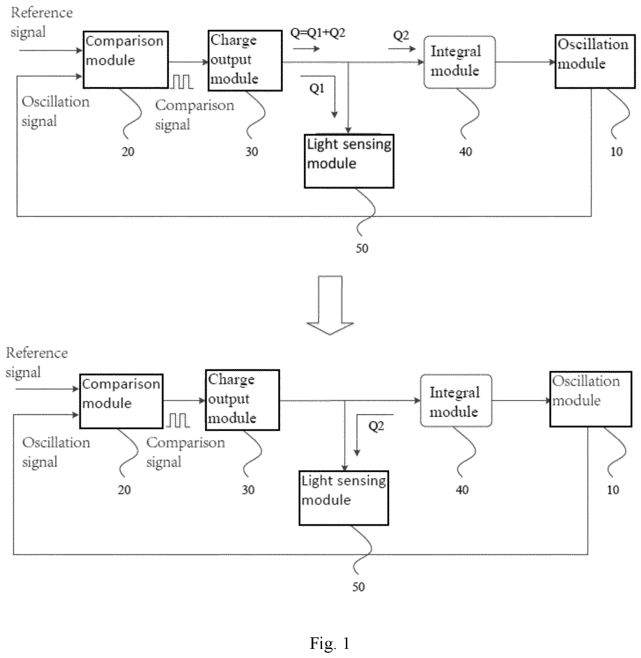

Referring to Fig. 1 first, there is shown a schematic block diagram of a light sensor readout circuit according to an embodiment of the present disclosure, which is configured to read a current of a light sensing module 50.The light sensor readout circuit includes: an oscillation module 10 configured to output an oscillation signal $F_{RET}$; a comparison module 20 configured to compare a reference signal $F_{REF}$ with the oscillation signal $F_{RET}$ to output a comparison signal Dout; a charge output module 30 having a control end connected to an output end of the comparison module 20, the charge output module 30 being configured to alternately output charges according to the comparison signal Dout; an integral module 40 having an input end connected to an output end of the charge output module 30 and an output end connected to a control end of the oscillation module 10, the integral module 40 being configured to control an oscillation frequency of the oscillation module 10 to alternately increase or decrease according to the charges alternately output by the charge output module 30; and a light sensing module 50 connected to the integral module 40. After receiving the charges output by the charge output module 30, the integral module 40 outputs charges to the light sensing module 50. A quantity of the charges output by the charge output module 30 is equal to a quantity of charges passing through the light sensing module 50.

Specifically, the oscillation module 10 may convert a direct current (DC) voltage signal into an alternating current (AC) voltage signal having a certain frequency (for example, a sine wave signal or a square wave signal), and the oscillation frequency of the oscillation module 10 may be controlled and changed by the integral module 40, so that the phase difference between the oscillation signal $F_{RET}$ output by the oscillation module 10 and the reference signal $F_{REF}$ is changed. For example, the oscillation module 10 may have an oscillation excitation mode such as a self-excitation oscillation mode or a drive oscillation mode. The oscillation module 10 may include a resistor-capacitor oscillator (RC oscillator), an inductor-capacitor oscillator (LC oscillator), a crystal oscillator, a tuning fork oscillator, and the like.

The comparison module 20 may compare the reference signal $F_{REF}$ with the oscillation signal $F_{RET}$ and output the comparison signal Dout, so that the charge output module 30 alternately outputs charges according to the comparison signal Dout. In some embodiments of the present disclosure, the comparison module 20 may compare the phase of the reference signal $F_{REF}$ and the oscillation signal $F_{RET}$ to determine a phase difference. In some other embodiments of the present disclosure, the comparison module 20 may compare the frequencies of the reference signal $F_{REF}$ and the oscillation signal $F_{RET}$. For example, the comparison module 20 may include a frequency phase detector, a gate phase detector, a tri-state phase detector, or the like.

In some embodiments of the present disclosure, a first input end of the comparison module 20 may receive the reference signal $F_{REF}$, and a second input end may be connected to an output end of the oscillation module to receive the oscillation signal $F_{RET}$. It will be appreciated that the reference signal $F_{REF}$ may be generated by the comparison module 20 itself, for example using an oscillator to generate the reference signal.

The charge output module 30 may alternately output charges according to the comparison signal Dout so that the integral module 40 controls the oscillation frequency of the oscillation module 10 to alternately increase or decrease according to the changing charge quantity. In some embodiments of the present disclosure, the charge output module 30 has a first operating state and a second operating state, and the charge output module 30 switches between the first operating state and the second operating state based on the comparison signal Dout, so that the charge output module 30 alternately outputs charges. For example, the alternate switching between the first operating state and the second operating state of the charge output module 30 may be implemented by using a switch. For example, a fixed current source may be provided, and when the switch is closed, the charge output module 30 supplies charges to the integral module 40; and when the switch is opened, the charge output module 30 stops supplying charges to the integral module 40. The quantity of charges supplied by the charge output module 30 can be calculated by multiplying the fixed current and the closed duration time of the switch.

It can be understood that the charge output module 30 may also use a switch to control a current source which has a varying current, and the corresponding charge quantity may be calculated by integrating the varying current.

The integral module 40 may control the oscillation frequency of the oscillation module 10 to alternately increase or decrease according to the changing charge quantity. Specifically, the integral module 40 may control the oscillation frequency of the oscillation module 10 to alternately increase or decrease according to the charges alternately output by the charge output module 30. After the integral module 40 receives the charges output by the charge output module 30, the integral module 40 may output charges to the light sensing module 50. In some embodiments of the present disclosure where the charge output module 30 has a first operating state and a second operating state, when the charge output module 30 is in the first operating state, the charge output module 30 supplies charges to the integral module 40 which, based on the accumulated charges, controls the oscillation module 10 to increase the oscillation frequency; and when the charge output module 30 is in the second operating state, the charge output module 30 stops supplying charges to the integral module 40 which discharges charges to the light sensing module 50 and, based on the discharged charges, controls the oscillation module 10 to decrease the oscillation frequency.

In some embodiments of the present disclosure where the comparison module compares the phase of the reference signal $F_{REF}$ and the phase of the oscillation signal $F_{RET}$ to determine the phase difference, when the charge output module 30 is in the first operating state, the charge output module 30 supplies charges to the integral module 40 which, based on the accumulated charges, controls the oscillation module 10 to increase the oscillation frequency to reduce the phase difference between the input signal $F_{REF}$ and the feedback signal $F_{RET}$; and when the charge output module 30 is in the second operating state, the charge output module 30 stops supplying charges to the integral module 40 which discharges charges to the light sensing module 50 and, based on the discharged charges, controls the oscillation module 10 to decrease the oscillation frequency to increase the phase difference between the input signal $F_{REF}$ and the feedback signal $F_{RET}$.

In the above processes, as the oscillation frequency of the oscillation module 10 alternately increases or decreases, the input signal $F_{REF}$ and the feedback signal $F_{RET}$ maintain a corresponding phase difference, so that the comparison module 20 continuously outputs the comparison signal Dout associated with the phase difference, which can ensure that the light sensor readout circuit performs current measurement in an unstable state.

It is noted that as charges cannot flow through the integral module 40 during the first operating state and the second operating state, the accumulated quantity of charges output by the charge output module 30 to the integral module 40 during a plurality of switching between the first operating state and the second operating state is equal to the charges discharged by the integral module 40 to the light sensing module 50.

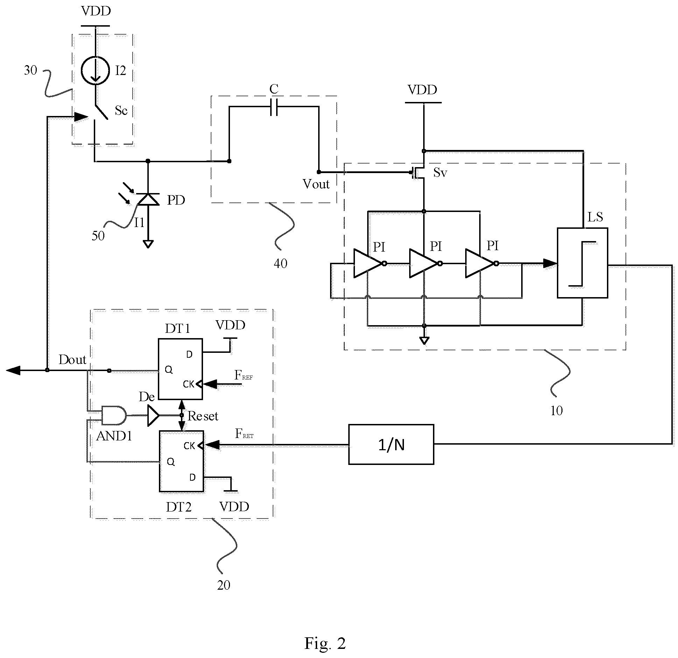

As an example, referring to Fig. 2, there is shown a schematic circuit diagram of the light sensor readout circuit according to an embodiment of the present disclosure. As shown, the integral module 40 may include a capacitor C, of which one end is connected to the charge output module 30, and the other end is connected to the oscillation module 10. When the charge output module 30 charges the capacitor C, one plate of the capacitor accumulates charges, and the voltage of the other plate gradually decreases, which controls the oscillation module 10 to increase the oscillation frequency, so that the phase difference between the reference signal $F_{REF}$ and the oscillation signal $F_{RET}$ is reduced; and when the charge output module 30 stops charging the capacitor C, the charges accumulated on the one plate of the capacitor is discharged to the light sensing module 50, while the voltage of the other plate gradually increases, which controls the oscillation module 10 to decrease the oscillation frequency, so that the phase difference between the reference signal $F_{REF}$ and the oscillation signal $F_{RET}$ increases.

In an embodiment of the present disclosure, the comparison module 20 compares the reference signal $F_{REF}$ and the oscillation signal $F_{RET}$ to generate a comparison signal Dout, based on which the charge output module 30 alternately outputs charges, and the integral module 40 may control the oscillation frequency of the oscillation module 10 to alternately increase or decrease according to the changing charge quantity.

Since the reference signal $F_{REF}$ and the oscillation signal $F_{RET}$ reach a dynamic balance in the above alternating process, the comparison module 20 can continuously output the comparison signal Dout, and because the average quantity of charges flowing into the integral module 40 is equal to 0 during the time period when the oscillation frequency of the oscillation module 10 is dynamically changed, the quantity of charges output by the charge output module 30 is equal to the quantity of charges passing through the light sensing module 50. Therefore, the quantity of charges passing through the light sensing module 50 can be cumulatively measured based on the comparison signal Dout (for example, the product of the high level time of the comparison signal Dout and the fixed current of the charge output module 30), and the current of the light sensing module 50 can be calculated accordingly. The light intensity can be eventually obtained through a relationship between the current of the light sensing module 50 and the light intensity.

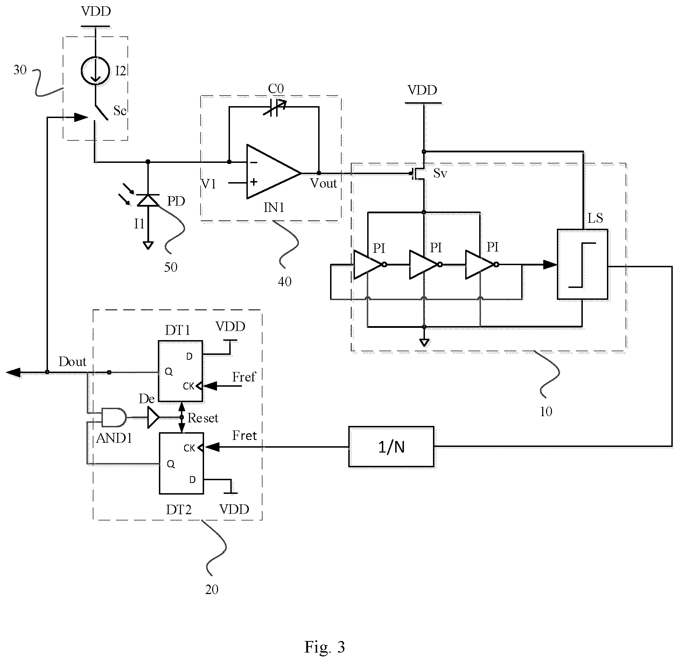

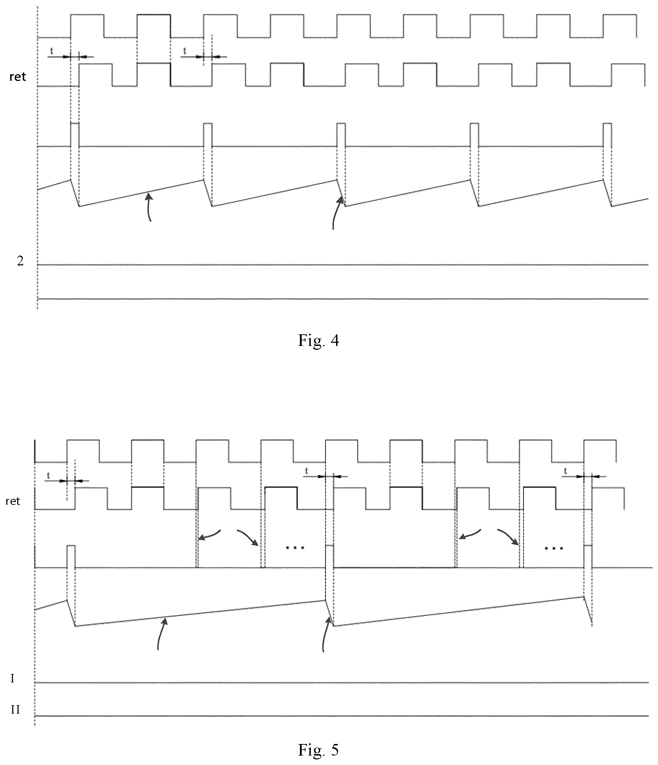

Fig. 3 shows a schematic circuit diagram of the light sensor readout circuit according to another embodiment of the present disclosure, and Fig. 4 shows a timing chart of pulse signals for the light sensor readout circuit according to the embodiment of the present disclosure. Referring to Figs. 1, 3 and 4, the light sensing module 50 is connected between the charge output module 30 and the integral module 40. Specifically, the light sensing module 50 is connected with the output end of the charge output module 30 and the input end of the integral module 40. When the charge output module 30 is in the first operating state, the charge output module 30 simultaneously supplies charges to the integral module 40 and the light sensing module 50. When the charge output module 30 is in the second operating state, the charge output module 30 stops supplying charges to the integral module 40 and the light sensing module 50. During the first operating state, the charge output module 30 may supply a quantity Q1 of charges and a quantity Q2 of charges to the light sensing module 50 and the integral module 40, respectively, while during the second operating state, the charge quantity Q2 accumulated at the integral module 40 may flow to the light sensing module 50. Therefore, the accumulated quantity Q of charges output by the charge output module 30 is equal to the quantity of charges flowing through the light sensing module 50, i.e., the sum of the quantity Q1 of charges and the quantity Q2 of charges.

Referring still to Figs, 1, 3 and 4, in some embodiments of the present disclosure where the light sensing module 50 is connected between the charge output module 30 and the integral module 40, the integral module 40 may include an integrator IN1, and the light sensing module 50 may include a photodiode PD. An inverting input end of the integrator IN1 may be connected with a negative pole of the photodiode PD, a non-inverting input end of the integrator IN1 may receive a first preset voltage V1, an output end of the integrator IN1 may be connected with the oscillation module 10, and a positive pole of the photodiode PD may be grounded.

It should be noted that when the integral module 40 adopts the integrator IN1, in a first aspect, the positive input end and the inverting input end of the integrator IN1 have the same voltage due to virtual short characteristics, which can ensure the voltage stability of the photodiode PD and prevent change of the photogenerated current due to voltage fluctuation of the photodiode PD. In a second aspect, a capacitor C0 of the integrator IN1 does not allow charges to pass through, which ensures the quantity of charges output by the charge output module 30 to be equal to a current flowing through the photodiode PD. Additionally in a third aspect, the integrator IN1 outputs a linear voltage signal Vout due to a change in the charge quantity of the capacitor C0, which helps control the oscillation module 10 to increase or decrease the oscillation frequency.

It can be understood that the light sensing module 50 may also adopt semiconductor devices utilizing the same photoelectric effect as the photodiode PD, and it is not limited to the photodiode.

Referring still to Figs. 1, 3 and 4, in some embodiments of the present disclosure, the charge output module 30 may include a control switch Sc, of which one end is connected to the inverting input end of the integrator IN1, the other end is connected to a fixed current source, and a control end may receive the comparison signal Dout based on which the switch state may be changed so that the charge output module 30 may switch between the first operating state and the second operating state.

For example, the control switch Sc may be a MOS transistor, and the control end of the control switch Sc is a gate of the MOS transistor. If the control switch Sc is an NMOS transistor, the control switch Sc is closed when the comparison signal Dout is at a high level, and the charge output module 30 operates in the first operating state. When the comparison signal Dout is at a low level, the control switch Sc is open, and the charge output module 30 operates in the second operating state. It can be understood that the control switch Sc may also be electronic components having a switching function such as a PMOS transistor or an IGBT.

Referring still to Figs. 1, 3 and 4, in some embodiments of the present disclosure where the charge output module 30, when operating in the first operating state, simultaneously supplies charges to the integral module 40 and the light sensing module 50, as the charge output module 30 simultaneously supplies charges to the integral module 40 and the light sensing module 50 when the control switch Sc is closed and the integral module 40 supplies charges to the light sensing module 50 when the control switch Sc is opened, and at the same time the currents of the charge output module 30 and the light sensing module 50 are stable, according to the principle of charge conservation, the current of the light sensing module 50 satisfies the following relationship:

$$ I1 = I2 * T1/(T1+T2) \qquad (1) $$

where I1 is the current of the light sensing module 50, i.e., the fixed current output by the fixed current source, I2 is the current of the charge output module 30, T1 is time during which the control switch Sc is closed, and T2 is time during which the control switch Sc is opened.

It should be note that, the opened time T2 of the control switch Sc refers to the time during which the control switch Sc operates in the opened state, and it does not include the time during which the control switch Sc is off while the entire circuit is in the non-operating state. In some embodiments of the present disclosure where the control switch Sc is an NMOS transistor, the closed time T1 of the control switch Sc refers to the high level time of the comparison signal Dout, and the opened time T2 of the control switch Sc refers to the low level time of the comparison signal Dout.

It can be understood that the control switch Sc may also be connected to a current source having a varying current, and the quantity of charges output by the control switch Sc when it is closed can be obtained by an integration operation.

Further, referring to Fig. 5, there is shown a timing chart of pulse signals for the light sensor readout circuit according to another embodiment of the present disclosure. In some embodiments of the present disclosure, as the phase difference between the reference signal $F_{REF}$ and the oscillation signal $F_{RET}$ is usually not fixed and it may be very small, the comparison module 20 may filter out the small phase difference to prevent the comparison signal Dout from frequently opening or closing the control switch Sc.

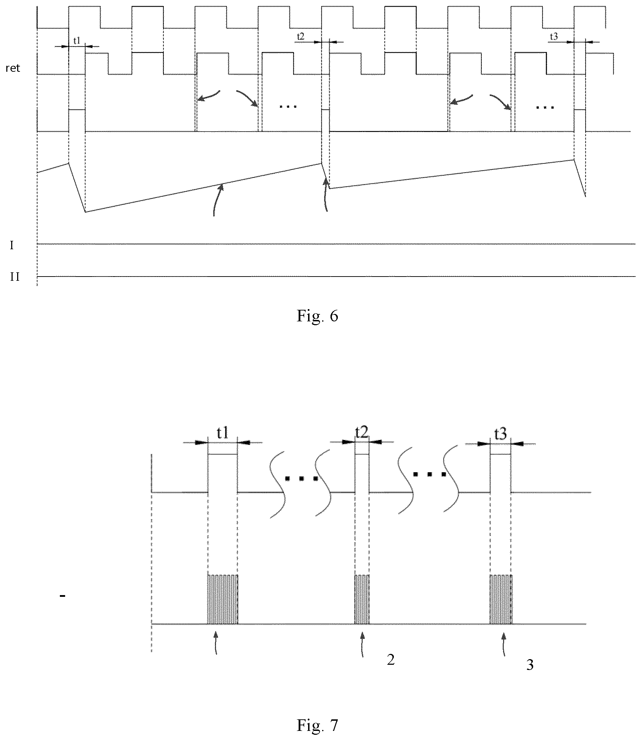

Fig. 6 is a timing chart showing pulse signals for the light sensor readout circuit according to another embodiment of the present disclosure, and Fig. 7 is a schematic diagram showing a high level time measurement of the comparison signal Dout according to the embodiment of the present disclosure. Referring to Figs. 6 and 7, if the phase difference between the reference signal $F_{REF}$ and the oscillation signal $F_{RET}$ is usually not fixed (for example, phase differences t1, t2, and t3 as shown in Fig. 6), a high-frequency reference signal having a fixed period may be compared with the comparison signal Dout, and a counter may be used to count the number of pulses of the high-frequency reference signal corresponding to the high level time of the comparison signal Dout (for example, N1, N2, and N3 as shown in Fig. 7). The high level time of the comparison signal Dout, i.e., the closed time T1 or the opened time T2 of the control switch Sc, can be obtained by multiplying the number of pulses with the fixed period of the high-frequency reference signal.

In the above-described method of measuring the number of pulses of the high-frequency reference signal, since the number of pulses of the high-frequency reference signal corresponding to the high level time of the comparison signal Dout may not be an integer, there may be a certain error in measuring the high level time of the comparison signal Dout.

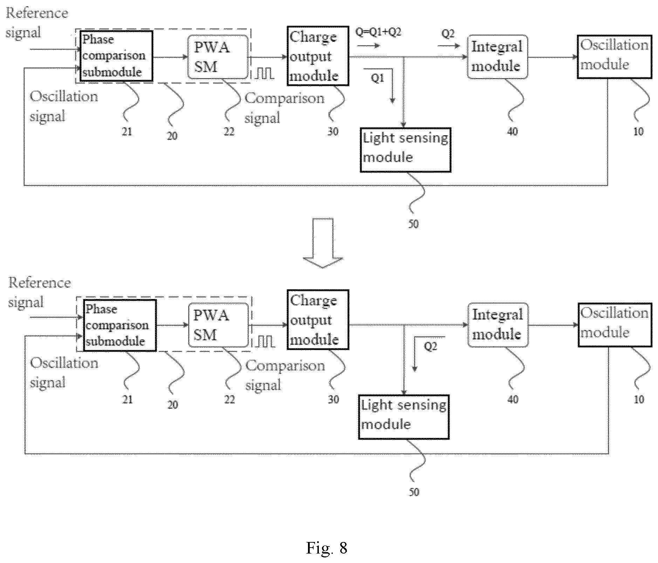

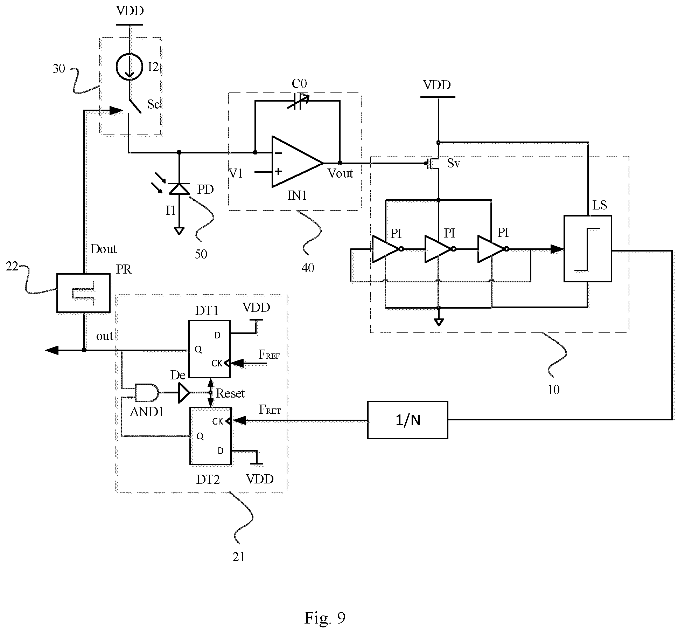

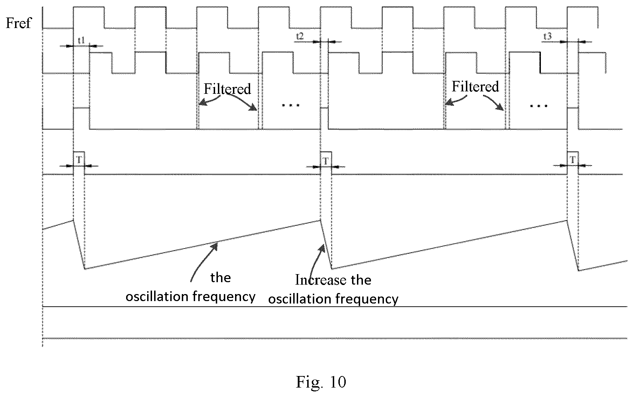

Fig. 8 is a schematic block diagram showing a light sensor readout circuit according to another embodiment of the present disclosure, Fig. 9 is a schematic circuit diagram of a light sensor readout circuit according to another embodiment of the present disclosure, and Fig. 10 is a timing chart showing pulse signals for a light sensor readout circuit according to an embodiment of the present disclosure. Referring to Figs. 8, 9 and 10, the comparison module 20 may include a phase comparison submodule 21 and a pulse width adjustment submodule (PWA SM) 22. The phase comparison submodule 21 may compare the phase of the reference signal $F_{REF}$ and the phase of the oscillation signal $F_{RET}$ to determine a phase difference and outputs a signal out to be processed, which may have a pulse width equal to the phase difference between the oscillation signal $F_{RET}$ and the reference signal $F_{REF}$. The pulse width adjustment submodule 22 may adjust the pulse width of the to-be-processed signal out to generate a comparison signal Dout having a fixed pulse width T.

It should be noted that since the pulse width adjustment submodule 22 generates the comparison signal Dout having the fixed pulse width, the number of pulses of the comparison signal Dout can be measured by a counter, and the closed time T1 of the control switch Sc may be obtained by multiplying the number of pulses with the corresponding fixed pulse width. In this way, the high level time of the comparison signal Dout can be accurately measured, which can ensure accurate measurement of the current of the photodiode PD.

In some embodiments of the present disclosure where the comparison module 20 includes the phase comparison submodule 21 and the pulse width adjustment submodule 22, the current of the light sensing module 50 satisfies the following relationship:

$$I1 = I2 * T * N \qquad (2)$$

where I1 is the current of the light sensing module 50, I2 is the current of the charge output module 30, T is the fixed pulse width of the comparison signal Dout, and N is the number of times the control switch Sc is closed per unit time (for example, 1 second).

It should be note that the number N of times the control switch Sc is closed can be obtained by using a counter to count the number of pulses of the comparison signal Dout. It can be understood that in the above embodiments the pulse width adjustment submodule 22 adjusts the high level time of the comparison signal Dout, while in some other embodiments of the present disclosure, for example, in embodiments where the control switch Sc is a PMOS transistor, the pulse width adjustment submodule 22 may also adjust the low level time of the comparison signal Dout.

Referring still to Figs. 9 and 10, in some embodiments of the present disclosure, the phase comparison submodule 21 may include a first flip-flop DT1, a second flip-flop DT2, a first AND gate AND1, and a first delayer De. The pulse width adjustment submodule 22 may include a pulse generator PR. A control end of the first flip-flop DT1 may receive the reference signal $F_{REF}$, an input end of the first flip-flop DT1 may receive an operating voltage VDD, and an output end of the first flip-flop DT1 may be connected to a first input end of the first AND gate AND1. A control end of the second flip-flop DT2 may receive the oscillation signal $F_{RET}$, an input end of the second flip-flop DT2 may receive the operating voltage VDD, and an output end of the second flip-flop DT2 may be connected to a second input end of the first AND gate AND 1. An input end of the first delayer De may be connected to an output end of the first AND gate AND1, and a reset end of the first flip-flop DT1 and a reset end of the second flip-flop DT2 may be connected to an output end of the first delayer. An input end of the pulse generator PR may be connected to an output end of the first flip-flop DT1 or the second flip-flop DT2, and an output end of the pulse generator PR may be connected to the control end of the control switch Sc.

It should be note that, due to the first AND gate AND 1, when there is a time difference (that is, a phase difference) between the rising edges of input signals from the first flip-flop DT1 and the second flip-flop DT2, the first AND gate AND1 controls the reset ends of the first flip-flop DT1 and the second flip-flop DT2 to reset the flip-flop state so that the first flip-flop DT1 generates a high level signal corresponding to the to-be-processed signal out, and then generates a low level signal corresponding to the to-be-processed signal out after resetting the state of the first flip-flop DT1 until the next rising edge arrives. Therefore, the to-be-processed signal out associated with the phase difference between the oscillation signal $F_{RET}$ and the reference signal $F_{REF}$ is generated. The first delayer De can delay the time when the output signal of the first AND gate AND1 controls the first flip-flop DT1 and the second flip-flop DT2 to reset the state, so that a small phase difference can be filtered out to avoid frequent response of the system.

It can be understood that in the above-described embodiments, the to-be-processed signal out is output from the output end of the first flip-flop DT1, and in some embodiments of the present disclosure where the control switch Sc is a PMOS transistor, the to-be-processed signal out may also be output from the output end of the second flip-flop DT2.

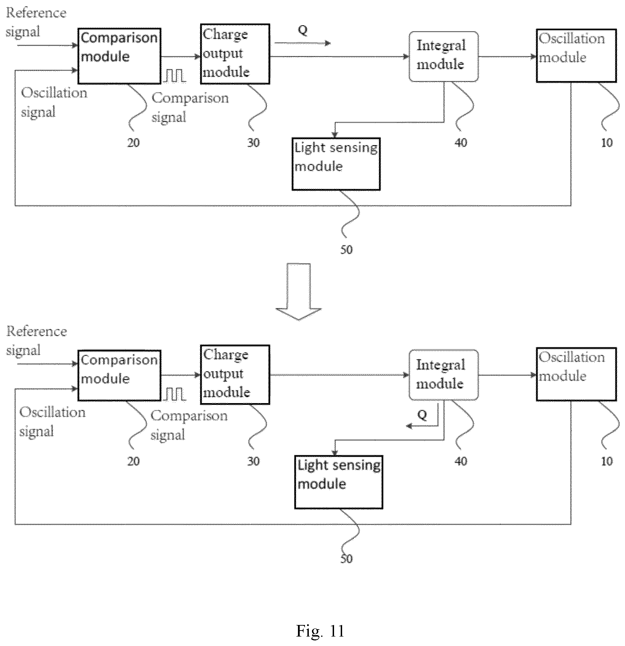

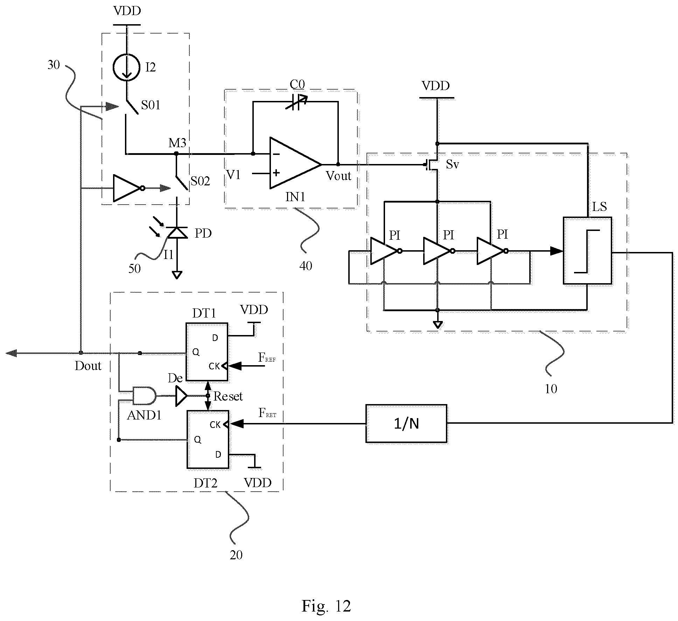

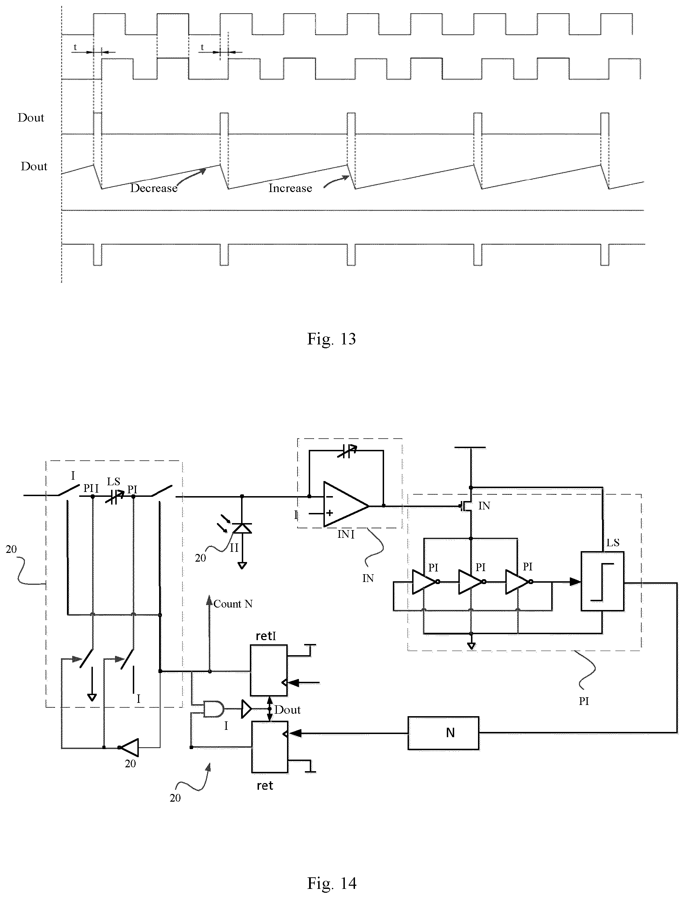

In some other embodiments of the present disclosure, the charge output module 30 may supply charges to only the integral module 40 when it is in the first operating state. Fig. 11 shows a schematic block diagram of a light sensor readout circuit according to another embodiment of the present disclosure, Fig. 12 shows a schematic circuit diagram of a light sensor readout circuit according to another embodiment of the present disclosure, and Fig. 13 shows a timing chart of pulse signals for a light sensor readout circuit according to another embodiment of the present disclosure. Referring to Figs. 11, 12 and 13, the integral module 40 may include an integrator IN1, and the light sensing module 50 may include a photodiode PD. The charge output module 30 may include a first sub-switch S01 and a second sub-switch S02. A non-inverting input end of the integrator IN1 may receive a first preset voltage V1, and an output end of the integrator IN1 may be connected to the oscillation module 10. One end of the second sub-switch S02 may be connected to an inverting input end of the integrator IN1, the other end may be connected to a negative pole of the photodiode PD, and a positive pole of the photodiode PD may be grounded. One end of the first sub-switch S01 may receive the operating voltage VDD, and the other end may be connected to a third node M3 between the second sub-switch S02 and the inverting input end of the integrator IN1. A control end of the first sub-switch S01 may receive the comparison signal Dout, based on which a switch state may be changed. The switch state of the first sub-switch S01 may be opposite to the switch state of the second sub-switch S02.

It should be note that in the above embodiments, since the switch state of the first sub-switch S01 is opposite to the switch state of the second sub-switch S02, when the charge output module 30 is in the first operating state, it supplies a quantity Q of charges to only the integral module 40, and when the charge output module 30 is in the second operating state, the integral module 40 supplies the equivalent quantity Q of charges to the light sensing module 50. In this circuit structure, the quantity of charges output by the charge output module 30 is still equal to the quantity of charges flowing through the light sensing module 50, and at the same time, the current of the light sensing module 50 satisfies the following relationship:

$$I1 = I2 * t01/t02 \quad (3)$$

where I1 is the current of the light sensing module 50, I2 is the current of the charge output module 30, t01 is the closed time of the first sub-switch S01, and t02 is the opened time of the second sub-switch S02.

It can be understood that the closed time of the first sub-switch S01 and the opened time of the second sub-switch S02 both are t01, and the opened time of the first sub-switch S01 and the closed time of the second sub-switch S02 both are t02. t01 may refer to the high level time of the comparison signal Dout, and t02 may refer to the low level time of the comparison signal Dout. In addition, the first sub-switch S01 and the second sub-switch S02 may be MOS transistors, such as PMOS transistors or NMOS transistors.

Referring still to Figs. 11, 12, and 13, the comparison module 20 may include a first flip-flop DT1, a second flip-flop DT2, a first AND gate AND1, and a first delayer De. A control end of the first flip-flop DT1 may receive the reference signal $F_{REF}$, an input end of the first flip-flop DT1 may receive the operating voltage VDD, and an output end of the first flip-flop DT1 may be connected to a first input end of the first AND gate AND1. A control end of the second flip-flop DT2 may receive the oscillation signal $F_{RET}$, an input end of the second flip-flop DT2 may receive the operating voltage VDD, and an output end of the second flip-flop DT2 may be connected to a second input end of the first AND gate AND1. An input end of the first delayer De may be connected to an output end of the first AND gate AND1, and a reset end of the first flip-flop DT1 and a reset end of the second flip-flop DT2 may be connected to an output end of the first delayer. The control end of the first sub-switch S01 may be connected to the output end of the first flip-flop DT1.

It should be note that when the first sub-switch S01 and the second sub-switch S02 are both NMOS transistors or PMOS transistors, an inverter may be used to invert the comparison signal Dout so as to control the second sub-switch S02. Under the control of the signal output by the first flip-flop DT1, the switch states of the first sub-switch S01 and the second sub-switch S02 are opposite to each other, that is, one is opened while the other is closed.

It can be understood that one of the first sub-switch S01 and the second sub-switch S02 may be an NMOS transistor and the other may be a PMOS transistor. In this case, one of the output signal of the first flip-flop DT1 and the output signal of the second flip-flop DT2 may be used to simultaneously control the first sub-switch S01 and the second sub-switch S02.

In some embodiments of the present disclosure, a ratio of the current of the light sensing module 50 to the current of the charge output module 30 may range from 1:5000 to 1:100, so that the current of the light sensing module 50 that has a relatively smaller current value is measured by using the current of the charge output module 30 that has a relatively larger current value.

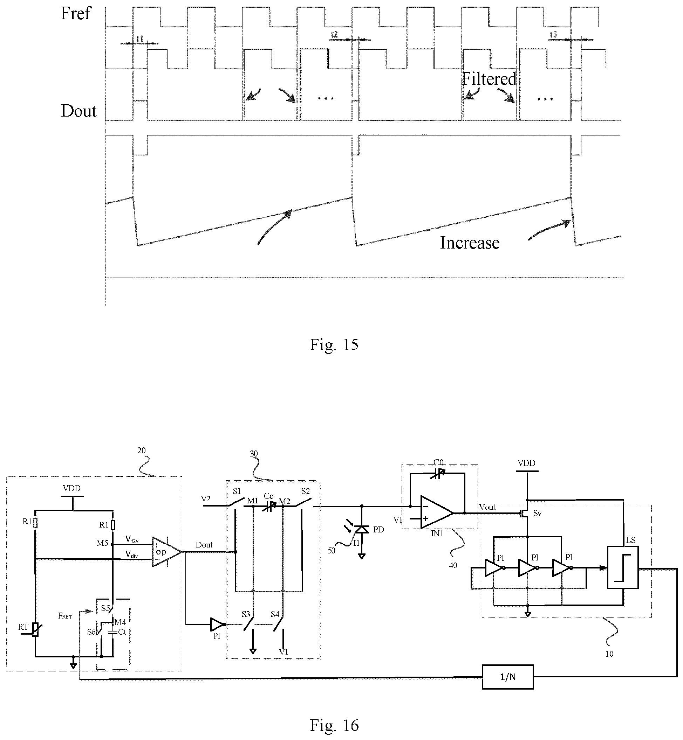

Fig. 14 shows a schematic circuit diagram of a light sensor readout circuit according to another embodiment of the present disclosure, and Fig. 15 shows a timing chart of pulse signals for a light sensor readout circuit according to another embodiment of the present disclosure. Referring to Figs. 14 and 15, in some embodiments of the present disclosure where the charge output module 30 simultaneously supplies charges to the integral module 40 and the light sensing module 50 when it is in the first operating state, the charge output module 30 may include a first switch S1, a second switch S2, a third switch S3, a fourth switch S4, and a control capacitor Cc. One end of the first switch S1 may be connected to a first end of the control capacitor Cc, and the other end may receive a second preset voltage V2. One end of the second switch S2 may be connected to a second end of the control capacitor Cc, and the other end may be connected to the inverting input end of the integrator IN1. One end of the third switch S3 may be connected to a first node M1 between the first switch S1 and the control capacitor Cc, and the other end may be grounded. One end of the fourth switch S4 may be connected to a second node M2 between the second switch S2 and the control capacitor Cc, and the other end may receive the first preset voltage V1. Control ends of the first switch S1 and the second switch S2 may receive the comparison signal Dout, based on which a switch state may be changed. Control ends of the third switch S3 and the fourth switch S4 may receive a control signal Dout2 obtained by inverting the comparison signal Dout, based on which a switch state thereof may be changed.

It should be noted that when the charge output module 30 is in the second operating state, the first switch S1 and the second switch S2 are in the open state, while the third switch S3 and the fourth switch S4 are in the closed state. The quantity of charges accumulated on a plate of the control capacitor Cc adjacent to the second switch S2 is: -Cc * V1. When the charge output module 30 is in the first operating state, the first switch S1 and the second switch S2 are in the closed state, while the third switch S3 and the fourth switch S4 are in the open state. The quantity of charges accumulated on a plate of the control capacitor Cc adjacent to the second switch S2 is: Cc * (V2-V1), so that the quantity of charges output by the charge output module 30 is Cc*V2. The current of the light sensing module 50 satisfies the following relationship:

$$I1 = Cc * V2 * N \quad (4)$$

where I1 is the current of the light sensing module 50, Cc is the capacitance of the control capacitor Cc, V1 is the first preset voltage, V2 is the second preset voltage, and N is a number of times the second switch S2 is closed per unit time (for example, 1 second).

It can be understood that the number of times the second switch S2 is closed can be obtained by using a counter to count the number of pulses of the comparison signal Dout.

Referring still to Figs. 14 and 15, in some embodiments of the present disclosure, the comparison module 20 may include a first flip-flop DT1, a second flip-flop DT2, a first AND gate AND1, a first delayer De, and a first inverter PI0. A control end of the first flip-flop DT1 may receive the reference signal $F_{REF}$, an input end of the first flip-flop DT1 may receive the operating voltage VDD, and an output end of the first flip-flop DT1 may be connected to a first input end of the first AND gate AND1. A control end of the second flip-flop DT2 may receive the oscillation signal $F_{RET}$, an input end of the second flip-flop DT2 may receive the operating voltage VDD, and an output end of the second flip-flop DT2 may be connected to a second input end of the first AND gate AND1. An input end of the first delayer De may be connected to an output end of the first AND gate AND1, and a reset end of the first flip-flop DT1 and a reset end of the second flip-flop DT2 may be connected to an output end of the first delayer. An input end of the first inverter PI0 may be connected to the output end of the first flip-flop DT1. The control ends of the first switch S1 and the second switch S2 may be connected to the output end of the first flip-flop DT1, and the control ends of the third switch S3 and the fourth switch S4 may be connected to an output end of the first inverter PI0.

It should be note that as the signal controlling the switch state of the first switch S1 and the second switch S2 and the signal controlling the switch state of the third switch S3 and the fourth switch S4 are inverted with respect to each other, if the first switch S1, the second switch S2, the third switch S3, and the fourth switch S4 all are PMOS transistors or NMOS transistors, the switch state of the first switch S1 and the second switch S2 is opposite to the switch state of the third switch S3 and the fourth switch S4 under the control of the signals output by the first flip-flop DT1 and the second flip-flop DT2.

It can be understood that the first switch S1 and the second switch S2 may also adopt NMOS transistors, while the third switch S3 and the fourth switch S4 may adopt PMOS transistors. In this case, the control ends of the first switch S1, the second switch S2, the third switch S3 and the fourth switch S4 all may be connected to the output end of the first flip-flop DT1.

In some embodiments of the present disclosure, a rising edge of the control signal Dout2 may not be at the same time as a falling edge of the comparison signal Dout, and a falling edge of the control signal Dout2 may not be at the same time as a rising edge of the comparison signal Dout, so as to avoid that the first switch S1, the second switch S2, the third switch S3, and the fourth switch S4 are opened or closed at the same time.

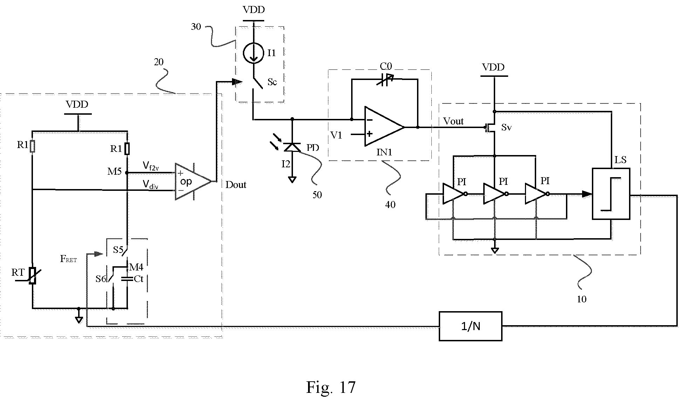

Fig. 16 shows a schematic circuit diagram of a light sensor readout circuit according to another embodiment of the present disclosure, and Fig. 17 shows a schematic circuit diagram of a light sensor readout circuit according to another embodiment of the present disclosure. Referring to Figs. 16 and 17, in some embodiments of the present disclosure where the comparison module 20 may compare the frequencies of the reference signal $F_{REF}$ and the oscillation signal $F_{RET}$, the comparison module may include a first resistor R1, a first comparator op, an equivalent capacitor Ct, a fifth switch S5, and a sixth switch S6. The first resistor R1, the fifth switch S5 and the equivalent capacitor Ct are connected in series in this order. One end of the first resistor R1 away from the fifth switch S5 may receive an operating voltage, and one end of the equivalent capacitor Ct away from the fifth switch S5 may be grounded. One end of the sixth switch S6 may be connected to a fourth node M4 between the fifth switch S5 and the equivalent capacitor Ct, and the other end may be grounded. An inverting input end of the first comparator op may receive a third preset voltage Vdiv, a non-inverting input end of the first comparator op may be connected to a fifth node M5 between the first resistor R1 and the fifth switch S5, and an output end of the first comparator op may output a comparison signal. A control end of the fifth switch S5 may receive the oscillation signal $F_{RET}$, based on which a switch state may be changed. The sixth switch S6 may have a switch state opposite to the fifth switch S5.

Specifically, the equivalent capacitor Ct, the fifth switch S5 and the sixth switch S6 may constitute an equivalent resistor, and the third preset voltage Vdiv is the reference signal. The higher the frequency of the oscillation signal, the lower the voltage Vf2v of the non-inverting input end of the first comparator op. When the voltage of the non-inverting input end of the first comparator op is lower than the third preset voltage Vdiv, the first comparator op outputs a low level signal. On the contrary, the lower the frequency of the oscillation signal, the higher the voltage $Vf2v$ of the non-inverting input end of the first comparator op. When the voltage of the non-inverting input end of the first comparator op is higher than the third preset voltage $Vdiv$, the first comparator op outputs a high level signal.

Referring to Fig. 16, in some embodiments of the present disclosure where the charge output module 30 includes the control switch Sc, the comparison signal Dout output by the first comparator op may directly control the control switch Sc to change the switch state. Referring to Fig. 12, in some other embodiments of the present disclosure where the charge output module 30 includes the control capacitor Cc, the comparison signal Dout output by the first comparator op may directly control the first switch S1, the second switch S2, the second switch S3, and the third switch S4.

It can be understood that the fifth switch S5 and the sixth switch S6 may be both PMOS transistors or NMOS transistors, the oscillation signal $F_{RET}$ may control the first switch S5, and the oscillation signal $F_{RET}$ may be inverted to control the sixth switch S6, so that the fifth switch S5 and the sixth switch S6 may have a state opposite to each other. In addition, the third preset voltage $Vdiv$ may be generated by dividing the voltage by means of the first resistor R1 and the resistor RT as shown in Fig. 16 or Fig. 17, or it may be generated in other ways, for example, by a separately provided power supply voltage.

It should be note that in the above-described embodiment, the equivalent capacitor Ct, the fifth switch S5, and the sixth switch S6 constitute an equivalent resistor to perform voltage comparison, but actually, the comparison signal Dout may be output in a manner that the equivalent capacitor Ct, the fifth switch S5, and the sixth switch S6 constitute an equivalent resistor to perform current comparison or the like.

Referring to Fig. 2, Fig. 3 or Fig. 12, in some embodiments of the present disclosure, the oscillation module 10 may include a ring oscillator and an acceleration switch Sv. The ring oscillator may comprise a plurality of inverters PI series-connected in a ring, and a control end of the acceleration switch Sv may be connected to the output end of the integrator IN1. One end of the acceleration switch Sv may receive the operating voltage VDD, and the other end may be connected to a power supply end of the inverter PI. When the acceleration switch Sv is turned on, the rate at which capacitors between the inverters PI are charged may increase, thereby causing the plurality of inverters PI series-connected in the ring to accelerate oscillation and increase the oscillation frequency of the oscillation signal $F_{RET}$. When the acceleration switch Sv is turned off, the charging rate of the capacitors between the inverters PI may decrease. Accordingly, the inverters PI series-connected in the ring may decrease the oscillation frequency and the oscillation frequency of the oscillation signal $F_{RET}$ may be decreased.

For example, the acceleration switch Sv may be a PMOS transistor, which may be turned on when the voltage of the output signal Vout of the integrator decreases, or turned off when the voltage of the output signal Vout of the integrator increases. It can be understood that the oscillation module 10 may further include a level shifter LS in order to shift a high level voltage of the signal output by the ring oscillator to the operating voltage VDD.

In some embodiments of the present disclosure, the control capacitor Cc and the capacitor C0 of the integrator may adopt variable capacitors to facilitate current measurement for different types of photodiodes.

It should be note that the above description of the light sensor readout circuit is intended to clearly explain the implementation and verification processes of the present disclosure, and those skilled in the art can make equivalent modification designs under the guidance of the present disclosure. For example, the control capacitor Cc and the capacitor C0 of the integrator may adopt fixed capacitors; and as another example, the acceleration switch Sv may use an NMOS transistor or an IGBT transistor.

Further, in order to better implement the light sensor readout circuit according to the embodiments of the present disclosure, based on the light sensor readout circuit, the present disclosure further provides a chip which includes the light sensor readout circuit described in any of the above embodiments. Since the chip according to embodiments of the present disclosure includes the light sensor readout circuit according to the above-described embodiments, the chip has all the beneficial effects of the light sensor readout circuit described in the above-described embodiments, which will not be repeated here.

In the above-described embodiments, the description of each embodiment has its own emphasis, and portions not described in detail in a certain embodiment can be refer to the above-described detailed description of other embodiments, and will not be repeated here.

The basic concepts have been described above, and it will be apparent to those skilled in the art that the above detailed disclosure is taken as examples only and does not constitute a limitation of the present disclosure. Although not explicitly stated herein, various modifications, improvements, and amendments may be made to the present disclosure by those skilled in the art. Such modifications, improvements, and modifications are suggested in this disclosure, and accordingly, such modifications, improvements, and modifications remain within the spirit and scope of the exemplary embodiments of this application.

Meanwhile, specific words are used in the present disclosure to describe embodiments of the present disclosure. For example, "one embodiment", "an embodiment", and/or "some embodiments" means a certain feature, structure, or characteristic related to at least one embodiment of the present disclosure. Therefore, it should be emphasized and noted that "an embodiment" or "one embodiment" or "an alternative embodiment" mentioned twice or more at different positions in this specification do not necessarily refer to the same embodiment. Furthermore, certain features, structures, or features in one or more embodiments of the present disclosure may be combined as appropriate.

Similarly, it should be noted that in order to simplify the disclosed description of the present disclosure and thereby facilitate the understanding of one or more embodiments of the disclosure, in the foregoing description of the embodiments of the present disclosure, a plurality of features may sometimes be combined into one embodiment, figure, or the description thereof. However, this method of disclosure does not mean that more features are required for the object of the present disclosure than those mentioned in the claims. In fact, the features of the embodiments are fewer than all of the features of the single embodiment disclosed above.

Numbers describing the quantity of components, attributes are used in some embodiments, and it should be understood that such numbers for the description of embodiments are modified in some examples using the modifiers "about," "approximately," or "substantially." Unless otherwise specified, "about," "approximately," or "substantially" indicates that the number allows for $\pm$ 20% variation. Accordingly, in some embodiments, the numerical parameters used in the specification and claims are approximations, and the approximations may vary depending on the desired characteristics of the individual embodiments. In some embodiments, numerical parameters should take into account specified significant digits and employ a general digit reservation approach. Although the numerical ranges and parameters used to confirm the breadth of their ranges in some embodiments of the present disclosure are approximate values, in specific embodiments, such values are set as precisely as possible.

The entire contents of each patent, patent application, patent application publication, and other materials, such as articles, books, specifications, publications, documents, etc. cited in this disclosure are hereby incorporated herein by reference, except for application history documents that are inconsistent with or conflict with the contents of this disclosure, and documents that limit the broadest scope of the claims of this disclosure (currently or subsequently appended to this disclosure). It should be noted that if there is any inconsistency or conflict between the description, definition, and/or use of terms in the accessory materials of this disclosure and the contents of this disclosure, the description, definition, and/or use of terms of this disclosure shall prevail.

The light sensor readout circuit and the chip provided by the embodiments of the present disclosure are described in detail above, and the principle and implementation of the present disclosure are described herein by applying specific examples, and the description of the above embodiments is only for helping to understand the method of the present disclosure and the core idea thereof. Furthermore, those skilled in the art may have some modifications in the specific embodiments and the scope of application according to the idea of the present disclosure, and in summary, the contents of the present specification should not be construed as limiting the present disclosure.

## Claims

1. A light sensor readout circuit for reading a current of a light sensing module, the light sensor readout circuit comprising:

   an oscillation module configured to output an oscillation signal;
   a comparison module configured to compare a reference signal with the oscillation signal and output a comparison signal;
   a charge output module configured to output charges according to the comparison signal;
   an integral module configured to change an oscillation frequency of the oscillation module according to the charges output by the charge output module,
   wherein a quantity of the charges output by the charge output module is equal to a quantity of charges passing through the light sensing module.

2. The light sensor readout circuit of claim 1, wherein the charge output module alternately outputs charges according to the comparison signal;

   the integral module alternately controls the oscillation frequency of the oscillation module to increase or decrease according to the charges alternately output by the charge output module;
   the integral module accumulates charges during a time period when the charge output module outputs charges and discharges the accumulated charges through the light sensing module during a time period when the charge output module stops outputting charges.

3. The light sensor readout circuit of claim 2, wherein the charge output module has a first operating state and a second operating state, and it switches between the first operating state and the second operating state based on the comparison signal;

   when the charge output module is in the first operating state, the charge output module supplies charges to the integral module, and the integral module controls the oscillation module to increase the oscillation frequency based on the accumulated charges;

when the charge output module is in the second operating state, the charge output module stops supplying charges to the integral module, the integral module discharges charges to the light sensing module, and the integral module controls the oscillation module to decrease the oscillation frequency based on the discharged charges.

4. The light sensor readout circuit of claim 3, wherein the light sensing module is connected to an output end of the charge output module, and when the charge output module is in the first operating state, the charge output module simultaneously supplies charges to the integral module and the light sensing module;

When the charge output module is in the second operating state, the charge output module stops supplying charges to the integral module and the light sensing module.

5. The light sensor readout circuit of claim 4, wherein the integral module comprises an integrator and the light sensing module comprises a photodiode;

an inverting input end of the integrator is connected with a negative pole of the photodiode, a non-inverting input end of the integrator is configured to receive a first preset voltage, an output end of the integrator is connected with the oscillation module, and a positive pole of the photodiode is grounded.

6. The light sensor readout circuit of claim 5, wherein the charge output module comprises a control switch;

one end of the control switch is connected with the inverting input end of the integrator, the other end of the control switch is connected to a fixed current source, and a control end of the control switch is configured to receive the comparison signal and change a switch state of the control switch based on the comparison signal such that the charge output module switches between the first operating state and the second operating state.

7. The light sensor readout circuit of claim 6, wherein the current of the light sensing module satisfies a following relationship:

$$I1 = I2 * T1/(T1+T2)$$

where I1 is the current of the light sensing module, I2 is a current of the charge output module, **T1** is time during which the control switch is closed, and T2 is time during which the control switch is opened.

8. The light sensor readout circuit of claim 6, wherein the comparison module comprises a phase comparison submodule and a pulse width adjustment submodule;

the phase comparison submodule is configured to compare a phase of the reference signal and a phase of the oscillation signal and output a signal to be processed which has a pulse width equal to a phase difference between the oscillation signal and the reference signal;

the pulse width adjustment submodule is configured to adjust the pulse width of the signal to be processed so as to generate the comparison signal with a fixed pulse width.

9. The light sensor readout circuit of claim 8, wherein the current of the light sensing module satisfies a following relationship:

$$I1 = I2 * T * N$$

where I1 is the current of the light sensing module, I2 is a current of the charge output module, T is the fixed pulse width of the comparison signal, and N is a number of times that the control switch is closed per unit time.

10. The light sensor readout circuit of claim 8, wherein the phase comparison submodule comprises a first flip-flop, a second flip-flop, a first AND gate, and a first delayer, and the pulse width adjustment submodule comprises a pulse generator;

a control end of the first flip-flop is configured to receive the reference signal, an input end of the first flip-flop is configured to receive an operating voltage, and an output end of the first flip-flop is connected with a first input end of the first AND gate;

a control end of the second flip-flop is configured to receive the oscillation signal, an input end of the second flip-flop is configured to receive the operating voltage, and an output end of the second flip-flop is connected with a second input end of the first AND gate;

an input end of the first delayer is connected to an output end of the first AND gate, and a reset end of the first flip-flop and a reset end of the second flip-flop are connected to an output end of the first delayer;

an input end of the pulse generator is connected with the output end of the first flip-flop or the output end of the second flip-flop, and an output end of the pulse generator is connected with the control end of the control switch.

11. The light sensor readout circuit of claim 3, wherein the integral module comprises an integrator, and the light sensing module comprises a photodiode;

the charge output module includes a first sub-switch and a second sub-switch;
a non-inverting input end of the integrator is configured to receive a first preset voltage, and an output end of the integrator is connected with the oscillation module;
one end of the second sub-switch is connected with an inverting input end of the integrator, and the other end of the second sub-switch is connected with a negative pole of the photodiode, and a positive pole of the photodiode is grounded;
one end of the first sub-switch is configured to receive an operating voltage, and the other end of the first sub-switch is connected to a third node between the second sub-switch and the inverting input end of the integrator;
wherein a control end of the first sub-switch is configured to receive the comparison signal and change a switch state of the first sub-switch based on the comparison signal, and the switch state of the first sub-switch is opposite to a switch state of the second sub-switch.

12. The light sensor readout circuit of claim **11,** wherein the current of the light sensing module satisfies a following relationship:

$$I1 = I2 * t01/t02$$

where I1 is the current of the light sensing module, I2 is a current of the charge output module, t01 is time during which the first sub-switch is closed, and t02 is time during which the second sub-switch is opened.

13. The light sensor readout circuit of claim 12, wherein the comparison module comprises a first flip-flop, a second flip-flop, a first AND gate, and a first delayer;

a control end of the first flip-flop is configured to receive the reference signal, an input end of the first flip-flop is configured to receive the operating voltage, and an output end of the first flip-flop is connected with a first input end of the first AND gate;
a control end of the second flip-flop is configured to receive the oscillation signal, an input end of the second flip-flop is configured to receive the operating voltage, and an output end of the second flip-flop is connected with a second input end of the first AND gate;
an input end of the first delayer is connected to an output end of the first AND gate, and a reset end of the first flip-flop and a reset end of the second flip-flop are connected to an output end of the first delayer;
a control end of the first sub-switch is connected with the output end of the first flip-flop.

14. The light sensor readout circuit of any one of claims 7, 9 or 12, wherein a ratio of the current of the light sensing module to the current of the charge output module is in a range from 1: 5000 to 1: 100.

15. The light sensor readout circuit of claim 5, wherein the charge output module comprises a first switch, a second switch, a third switch, a fourth switch, and a control capacitor;

one end of the first switch is connected with a first end of the control capacitor, and the other end of the first switch is configured to receive a second preset voltage;
one end of the second switch is connected with a second end of the control capacitor, and the other end of the second switch is connected with the inverting input end of the integrator;
one end of the third switch is connected to a first node between the first switch and the control capacitor, and the other end of the third switch is grounded;
one end of the fourth switch is connected to a second node between the second switch and the control capacitor, and the other end of the fourth switch is configured to receive the first preset voltage;
control ends of the first switch and the second switch are configured to receive the comparison signal, and change switch states based on the comparison signal; and control ends of the third switch and the fourth switch are configured to receive a control signal inverted to the comparison signal, and change switch states based on the control signal.

16. The light sensor readout circuit of claim 15, wherein the current of the light sensing module satisfies a following relationship:

$$I1 = Cc * V2 * N$$

where I1 is the current of the light sensing module, Cc is a capacitance value of the control capacitor, V2 is the second preset voltage, and N is a number of times that the second switch is closed per unit time.

17. The light sensor readout circuit of claim 15, wherein the comparison module comprises a first flip-flop, a second flip-flop, a first AND gate, a first delayer, and a first inverter;

a control end of the first flip-flop is configured to receive the reference signal, an input end of the first flip-flop is configured to receive an operating voltage, and an output end of the first flip-flop is connected with a first input end of the first AND gate;

a control end of the second flip-flop is configured to receive the oscillation signal, an input end of the second flip-flop is configured to receive the operating voltage, and an output end of the second flip-flop is connected with a second input end of the first AND gate;

an input end of the first delayer is connected to an output end of the first AND gate, and a reset end of the first flip-flop and a reset end of the second flip-flop are connected to an output end of the first delayer;

an input end of the first inverter is connected to the output of the first flip-flop;

the control ends of the first switch and the second switch are connected to the output end of the first flip-flop, and the control ends of the third switch and the fourth switch are connected to an output end of the first inverter.

18. The light sensor readout circuit of claim 4, wherein the comparison module comprises a first resistor, a first comparator, an equivalent capacitor, a fifth switch, a sixth switch;

wherein the first resistor, the fifth switch, and the equivalent capacitor are sequentially connected in series, one end of the first resistor away from the fifth switch is configured to receive an operating voltage, and one end of the equivalent capacitor away from the fifth switch is grounded;

one end of the sixth switch is connected to a fourth node between the fifth switch and the equivalent capacitor, and the other end of the sixth switch is grounded;

an inverting input end of the first comparator is configured to receive a third preset voltage, a non-inverting input end of the first comparator is connected to a fifth node between the first resistor and the fifth switch, and an output end of the first comparator is configured to output the comparison signal; and

a control end of the fifth switch is configured to receive the oscillation signal and change a switch state of the fifth switch based on the oscillation signal, and a switch state of the sixth switch is opposite to the switch state of the fifth switch.

19. The light sensor readout circuit of claim 5 or 11, wherein the oscillation module comprises a ring oscillator and an acceleration switch;

wherein the ring oscillator comprises a plurality of inverters series-connected in a ring, and a control end of the acceleration switch is connected with the output end of the integrator; and one end of the acceleration switch is configured to receive an operating voltage, and the other end of the acceleration switch is connected with a power end of the inverter.

20. A chip comprising the light sensor readout circuit of any one of claims 1 to 19.

Reference
signal

Comparison
module

Charge
output
module

Q=Q1+Q2

Q2

Integral
module

Oscillation
module

Oscillation
signal

Comparison
signal

Q1

20

30

Light sensing
module

40

10

50

Reference
signal

Comparison
module

Charge
output
module

Integral
module

Oscillation
module

Oscillation
signal

Comparison
signal

Q2

20

30

Light sensing
module

40

10

50

Fig. 1

Fig. 2

Fig. 3

ret

2

Fig. 4

ret

I

II

Fig. 5

ret

I

II

Fig. 6

t1    t2    t3

2    3

Fig. 7

Reference
signal

| Phase comparison submodule | | PWA SM | | Charge output module | Q=Q1+Q2 → | Q2 → | Integral module | | Oscillation module |

Oscillation
signal

Comparison
signal

21    20    22    30

Q1 ↓

Light sensing
module

40    10

50

Reference
signal

| Phase comparison submodule | | PWA SM | | Charge output module | | Integral module | | Oscillation module |

Oscillation
signal

Comparison
signal

21    20    22    30

Q2 ↓

Light sensing
module

40    10

50

Fig. 8

Fig. 9

Fig. 10

Reference
signal

Comparison
module

Oscillation
signal

Comparison
signal

20

Charge
output
module

30

Q

Light sensing
module

50

Integral
module

40

Oscillation
module

10

Reference
signal

Comparison
module

Oscillation
signal

Comparison
signal

20

Charge
output
module

30

Integral
module

Q

40

Oscillation
module

10

Light sensing
module

50

Fig. 11

Fig. 12

Fig. 13

Fig. 14

EP 4 632 340 A1

Fig. 15

Fig. 16

28

EP 4 632 340 A1

Fig. 17

29

## INTERNATIONAL SEARCH REPORT

| International application No. |
| --- |
| **PCT/CN2023/092685** |

| A. | CLASSIFICATION OF SUBJECT MATTER |
| --- | --- |

G01J 1/44(2006.01)i

According to International Patent Classification (IPC) or to both national classification and IPC

| B. | FIELDS SEARCHED |
| --- | --- |

Minimum documentation searched (classification system followed by classification symbols)

IPC:G01J

Documentation searched other than minimum documentation to the extent that such documents are included in the fields searched

Electronic data base consulted during the international search (name of data base and, where practicable, search terms used)

CNTXT, ENTXTC, WPABSC, CNKI: 电荷泵, 电荷量, 输出, 读出, 光传感模块, 光传感器, 光学传感器, 频率, 武汉市聚芯微电子有限责任公司, 震荡, 振荡; charge pump, charge quantity, output, readout, light sensing module, light sensor, optical sensor, frequency

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| PX | CN 115839765 A (WUHAN SILICON INTEGRATED CO., LTD.) 24 March 2023 (2023-03-24)<br>claims 1-20 | 1-20 |
| Y | CN 104568146 A (HANGZHOU SILAN MICROELECTRONICS CO., LTD.) 29 April 2015 (2015-04-29)<br>description, paragraphs [0026]-[0040], and figures 1-4 | 1-20 |
| Y | CN 112368943 A (INTEL CORP.) 12 February 2021 (2021-02-12)<br>description, paragraphs [0038]-[0050], and figures 1-3 | 1-20 |
| A | CN 108206698 A (FUZHOU UNIVERSITY) 26 June 2018 (2018-06-26)<br>entire document | 1-20 |
| A | CN 111656687 A (AMS AG) 11 September 2020 (2020-09-11)<br>entire document | 1-20 |
| A | CN 113965075 A (WUHAN SILICON INTEGRATED CO., LTD.) 21 January 2022 (2022-01-21)<br>entire document | 1-20 |

☑ Further documents are listed in the continuation of Box C. ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 August 2023** | **21 August 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/092685** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 114556061 A (TRINAMIX GMBH) 27 May 2022 (2022-05-27)<br>entire document | 1-20 |
| A | JP 2013239876 A (SEIKO NPC CORP.) 28 November 2013 (2013-11-28)<br>entire document | 1-20 |

Form PCT/ISA/210 (second sheet) (July 2022)

## INTERNATIONAL SEARCH REPORT
### Information on patent family members

International application No.

**PCT/CN2023/092685**

| Patent document cited in search report | | | Publication date (day/month/year) | Patent family member(s) | | | Publication date (day/month/year) |
|---|---|---|---|---|---|---|---|
| CN | 115839765 | A | 24 March 2023 | None | | | |
| CN | 104568146 | A | 29 April 2015 | None | | | |
| CN | 112368943 | A | 12 February 2021 | DE | 112019002565 | T5 | 25 February 2021 |
| | | | | US | 2020195255 | A1 | 18 June 2020 |
| | | | | US | 10700688 | B1 | 30 June 2020 |
| | | | | WO | 2020123078 | A1 | 18 June 2020 |
| CN | 108206698 | A | 26 June 2018 | None | | | |
| CN | 111656687 | A | 11 September 2020 | EP | 3487075 | A1 | 22 May 2019 |
| | | | | WO | 2019096771 | A1 | 23 May 2019 |
| | | | | US | 2021218393 | A1 | 15 July 2021 |
| | | | | US | 11128826 | B2 | 21 September 2021 |
| CN | 113965075 | A | 21 January 2022 | None | | | |
| CN | 114556061 | A | 27 May 2022 | EP | 4042119 | A1 | 17 August 2022 |
| | | | | JP | 2022551694 | A | 13 December 2022 |
| | | | | US | 2022326075 | A1 | 13 October 2022 |
| | | | | WO | 2021069554 | A1 | 15 April 2021 |
| | | | | KR | 20220075419 | A | 08 June 2022 |
| JP | 2013239876 | A | 28 November 2013 | None | | | |

Form PCT/ISA/210 (patent family annex) (July 2022)